# EUROPEAN PATENT APPLICATION

(11) **EP 4 751 958 A1**
(43) Date of publication of application: **03.06.2026**
(21) Application number: 24216783.1
(22) Date of filing: 02.12.2024
(51) Int. Cl.: B60K 7/00, B60K 17/04, F16H 1/46, F16H 57/021

(54) **DRIVE UNIT FOR AN AXLE DRIVE APPARATUS OF A VEHICLE**

(71) Applicant: ZF Friedrichshafen AG, 88046 Friedrichshafen (DE)
(72) Inventor: Sun, Jiabin, Shanghai, 201615 (CN); Shen, Jiacheng, Shanghai, 201615 (CN); Fan, Zhenhua, Shanghai, 201615 (CN); Fei, Ningzhong, Shanghai, 201615 (CN)
(74) Representative: WBH Wachenhausen Patentanwälte PartG mbB

(57) **Abstract**

A drive unit is provided for an axle drive apparatus. The drive unit comprises a transmission comprising an input element (4), a first output element (5), a second output element (6) being separate from the first output element (5), and a driving element (7). A driving force of a motor (3) is providable at the input element (4).The first output element (5) is connected torque proofly to the second output element (6). The first output element (5) and the second output element (6) are connected torque proofly to the driving element (7) for outputting a driving force from the drive unit.

## Description

### Technical field

The present invention refers to a drive unit for an axle drive apparatus, an axle drive apparatus for a vehicle, and a vehicle with an axle drive apparatus.

### Prior art

Drive units for an axle drive apparatus of a vehicle are known. With the growing complexity of the construction of vehicles and the growing number of parts comprised by an axle drive apparatus, a drive unit having a simple construction is desired.

### Description of the invention

It is an object of the present invention to provide an improved drive unit for an axle drive apparatus that comprises a small installation space and a simple construction. The object is solved with a drive unit comprising the features of claim 1. Advantageous further developments are subject-matter of the dependent claims.

In a first aspect, a drive unit is provided for an axle drive apparatus of a vehicle. The vehicle may be formed by at least one of a passenger car, a truck or a working machine. The drive unit comprises a transmission. The transmission comprises an input element, a first output element, a second output element being separate from the first output element, and a driving element. Separate may be understood to define that the first output element and the second output element are different parts, e.g. before assembly of the drive unit, and are not integrally formed. This allows for simplified assembly of the drive unit. A driving force of a motor is providable at the input element. The transmission may be provided for dividing a driving force from the input element to the first output element and the second output element.

The first output element is connected torque proofly to the second output element. The first output element and the second output element are connected torque proofly to the driving element for outputting a driving force from the drive unit. Thus, the transmission may be configured for providing a constant transmission ratio from the input element to the driving element that cannot be changed. The first output element of the second output element may comprise the same rotational speed in all operational states of the drive unit. A driving force outputted from the first output element and a driving force outputted from the second output element may be summarized and transmitted to the driving element. This provides a special transmission ratio from the input element to the driving element that cannot be provided by a conventional transmission.

When two elements are mechanically linked, the elements are directly or indirectly coupled to each other such that a movement of the one element causes a reaction of the other element. For example, a mechanical link may be provided by a frictional engagement or a positive locking. The mechanical link may correspond to a meshing of corresponding gears of the two elements. Between the elements, further elements like one or more spur gear stages may be present. A permanent torque proof connection is a connection for that the two elements are rigidly coupled with each other for each conventional condition of for instance a transmission. The elements may be formed as separate elements connected torque proofly with each other or may be formed integrally.

The torque proof connection between the first output element and the second output element may comprise a snap ring. The snap ring may be configured for positioning the first output element and the second output element in an axial direction with respect to each other. A rotation axis of the input element, the first output element or the second output element may be arranged in the axial direction. A radial direction may be transverse, e.g. perpendicular, to the axial direction. A circumferential direction may be arranged around the rotation axis of the input element. The drive unit may comprise a stationary element. The stationary element may be formed by a housing, e.g. a motor housing, a transmission housing, a drive unit housing or an axle drive housing. The housing may be formed for accommodating the motor and the transmission. The driving element may extend in the axial direction from an inside of the housing to the outside of the housing.

The motor may be formed by an electric motor. The motor may be formed by a synchronous or an asynchronous machine. The motor may comprise a rotor and a stator. The motor may comprise a driving shaft. The driving shaft may be connected torque proofly to or may be formed by the rotor. The input element of the first planetary gear set may be torque proofly connected to the driving shaft of the motor. The input element of the first planetary gear set may be formed by the driving shaft of the motor.

In one embodiment of the drive unit, the torque proof connection between the first output element and the separate second output element may be provided by at least one of a form-fit and a material-locking connection. In one embodiment of the drive unit, the torque proof connection may be formed by at least one of a welded connection and a dog toothing. The dog toothing of the torque proof connection between the first output element of the second output element may comprise at least one of a spline shaft profile and a splined shaft profile.

In one embodiment of the drive unit, the transmission may comprise a first planetary gear set and a second planetary gear set, each comprising a first gear set element, a second gear set element, and a third gear set element. The input element may be connected torque proofly to the first gear set element of the first planetary gear set. The second gear set element of the first planetary gear set may be connected torque proofly to the first output element. The third gear set element of the first planetary gear set may be connected torque proofly to the first gear set element of the second planetary gear set. The second gear set element of the second planetary gear set may be connected torque proofly to the stationary element. The third gear set element of the second planetary gear set may be connected torque proofly to the second output element. The first planetary gear set and the second planetary gear set may be arranged in the same plane in the axial direction. The second planetary gear set may be arranged outside of the first planetary gear set in the radial direction. The first planetary gear set and the second planetary gear set may be arranged displaced with respect to each other in the axial direction.

The first planetary gear set may comprise a first sun gear, a first carrier, a first planetary stud, a first planetary gear and the first ring gear. The first planetary gear set may comprise four first planetary studs and four first planetary gears. The first sun gear may be in meshing engagement with the first planetary gear. The first planetary gear may be in meshing engagement with the first ring gear. The first planetary gear may be rotatably supported by the first planetary stud. The first planetary stud may be attached to the first carrier. The first output element may be formed by the first carrier.

The second planetary gear set may comprise a second sun gear, a second carrier, a second planetary stud, a second planetary gear and a second ring gear. The second planetary gear set may comprise four second planetary studs and four second planetary gears. The second sun gear may be in meshing engagement with the second planetary gear. The second planetary gear may be in meshing engagement with the second ring gear. The second planetary gear may be rotatably supported by the second planetary stud. The second planetary stud may be attached to the second carrier. The second ring gear may be connected torque proofly, e.g. by a dog toothing, to a ring gear carrier. The second output element may be formed by the ring gear carrier.

The respective first gear set element may be formed by the respective sun gear. The first and the second planetary gear set may be formed as a minus planetary gear set or as a plus planetary gear set. When the first or the second planetary gear set is formed as a minus planetary gear set, the respective second gear set element may be formed by the carrier. The respective third gear set element may be formed by the ring gear. When the first or the second planetary gear set is formed as a plus planetary gear set, the respective second gear set element may be formed by the ring gear. Then, the respective planetary gear set may comprise double planetary gears being in meshing engagement with each other. The respective third gear set element may be formed by the carrier.

In one embodiment of the drive unit, the first gear set element of the first planetary gear set may be formed by the first sun gear. The second gear set element of the first planetary gear set may be formed by the first carrier. The third gear set element of the first planetary gear set may be formed by the first ring gear. The first gear set element of the second planetary gear set may be formed by the second sun gear. The second gear set element of the second planetary gear set may be formed by the second carrier. The third gear set element of the second planetary gear set may be formed by the second ring gear.

In one embodiment of the drive unit, the torque proof connection between the second gear set element of the second planetary gear set and the stationary element may comprise a dog toothing. The dog toothing of the torque proof connection between the second gear set element of the second planetary gear set and the stationary element may comprise at least one of a spline shaft profile and a splined shaft profile. The dog toothing may be arranged in the radial direction at an outer side of the second planetary gear set. The dog toothing may be arranged in the radial direction outside of at least one of the second gear set element and the third gear set element of the second planetary gear set. This is applicable e.g. for the case that the first planetary gear set and the second planetary gear set are formed as a minus planetary gear set, respectively.

In one embodiment of the drive unit, the first planetary gear set and the second planetary gear set may be radially stacked. The first planetary gear set and the second planetary gear set may be arranged in the same plane in the axial direction. The second planetary gear set may be arranged outside of the first planetary gear set in the radial direction. The first ring gear and the second sun gear may be formed by a sun ring gear. The sun ring gear may comprise the first ring gear on an inner circumference. The sun ring gear may comprise the second sun gear on an outer circumference. This is applicable e.g. for the case that the first planetary gear set and the second planetary gear set are formed as a minus planetary gear set, respectively.

In one embodiment of the drive unit, the drive unit may comprise the motor. The motor and the transmission may be arranged coaxially with respect to each other. Thereby, the drive unit may be configured compact in the radial direction.

In one embodiment of the drive unit, a first bearing unit and a second bearing unit for supporting the rotor of the motor may be arranged on opposing sides of the rotor, and the second bearing unit may be configured for additionally supporting the input element and may be arranged in the axial direction between the motor and the transmission. The first bearing unit may be configured for receiving a radial force. The first bearing unit may comprise a radial bearing. The radial bearing may be formed by a grooved ball bearing. The second bearing unit may be configured for receiving a radial force. The second bearing unit may comprise a radial bearing. The radial bearing may be formed by a grooved ball bearing. The radial bearing of the first bearing unit and of the second bearing unit may be configured identically.

In one embodiment of the drive unit, a third bearing unit for supporting the driving element may be arranged on a side of the transmission opposite to the motor. The third bearing unit may be configured for receiving a radial force. The third bearing unit may comprise a radial bearing. The radial bearing may be formed by a grooved ball bearing. The radial bearing may be formed by a double row ball bearing. Thereby, the bearing concept of the components of the drive unit may be provided by simply three bearing units which simplifies the construction of the drive unit.

In a second aspect, an axle drive apparatus comprises a first drive unit and a second drive unit according to one of the preceding embodiments. Further features, effects and advantages for the second aspect can be inferred from the features, effects and advantages of the first aspect. Features, effects and advantages of the second aspect also provide features, effects and advantages for the first aspect. The driving elements of the first drive unit and the second drive unit are directed into opposing directions.

The driving elements of the first drive unit and the second drive unit may be arranged at opposing sides of the axle drive apparatus. The driving element of the first drive unit may extend from an inside of the housing to an outside of the housing at a side opposite to a side of the axle drive apparatus where the driving element of the second drive unit extends from an inside of the housing to the outside of the housing. The first drive unit and the second drive unit may be configured identically. Both, the first drive unit and the second drive unit, may be formed by a drive unit according to one of the preceding embodiments.

In one embodiment of the axle drive apparatus, the first drive unit and the second drive unit may be arranged coaxially with respect to each other. The first drive unit and the second drive unit may be arranged adjacent to each other in the axial direction. The first drive unit and the second drive unit may be arranged symmetrically. In one embodiment of the axle drive apparatus, the first drive unit and the second drive unit each comprise the motor for inputting a driving force into the respective input element.

In one embodiment of the axle drive apparatus, the axle drive apparatus comprises a stationary element forming a housing. The housing comprises a central wall for separating a first housing space for accommodating the first drive unit from a second housing space for accommodating the second drive unit. The central wall may extend in the radial direction. The first housing space and the second housing space may be arranged displaced to each other in the axial direction. The first housing space and the second housing space may be arranged adjacent with respect to each other in the axial direction. The center wall may comprise a double bearing seat for accommodating the first bearing unit of the first driving unit and the first bearing unit of the second driving unit. Each of the first bearing units may be configured for supporting a respective end of the respective rotor of a respective motor of the respective drive unit.

In a third aspect, a vehicle comprises an axle drive apparatus according to one of the preceding embodiments. Further features, effects and advantages for the third aspect can be inferred from the features, effects and advantages of the preceding aspects. Features, effects and advantages of the third aspect also provide features, effects and advantages for the preceding aspects. The axle drive apparatus comprises at least two traction elements, wherein each of the driving elements of the axle drive apparatus is configured for driving one of the traction elements for moving the vehicle. The vehicle may be formed by at least one of a passenger car, a truck or a working machine, e.g. a tractor, wheel loader or a dumper. The traction element may comprise a driving wheel or a continuous track propulsion. Each of the traction elements may be mechanically linked, e.g. at least via one of a transmission, a cardan shaft and a hinge, to one of the driving elements. By the cardan shafts and the hinges between the traction elements and the driving elements, a steering angle or a range of spring may be provided.

### Brief description of the drawings

Figure 1 shows a sectional view of an embodiment of an axle drive apparatus comprising two drive units.
Figure 2 shows a detailed view of the axle drive apparatus shown in figure 1.
Figure 3 shows a further detailed view of the axle drive apparatus shown in figure 1.
Figure 4 shows a top view of a schematic diagram of an embodiment of a vehicle comprising an axle drive apparatus.

### Detailed description of embodiments

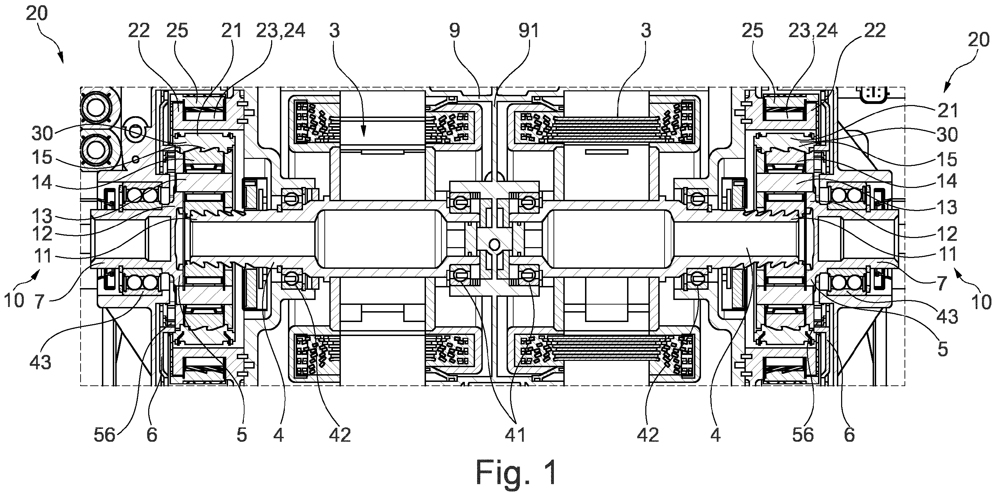

Figure 1 shows a sectional view of an embodiment of an axle drive apparatus comprising two drive units forming a first drive unit and a second drive unit. The first drive unit is accommodated in a first housing space of a stationary element forming a housing 9 on a first side of the axle drive apparatus, e.g. a left side in figure 1. The second drive unit is accommodated in a second housing space of the housing 9 on a second side of the axle drive apparatus, e.g. a right side in figure 1, opposite to the first side in the axial direction. The housing 9 comprises a central wall 91 separating the first housing space from the second housing space. The first housing space and the second housing space are arranged adjacent to each other in the axial direction. The housing 9 forms a mutual axle drive housing for the first drive unit and the second drive unit. The first drive unit and the second drive unit are arranged coaxially and symmetrically in the axial direction with respect to the central wall 91 adjacent to each other.

The two drive units are configured identically. Each of the two drive units comprises the mutual housing 9, a motor 3 and a transmission. The motor 3 and the transmission are arranged coaxially. The motor 3 is formed as an electric motor comprising a rotor and a stator. The rotor forms a driving shaft for providing a driving force to an input element 4 of the transmission. The transmission comprises a first planetary gear set 10, a second planetary gear set 20, the input element 4, a first output element 5, a second output element 6 being separate from the first output element 5, and a driving element 7. The transmission is configured for dividing the driving force from the input element 4 to the first output element 5 and the second output element 6.

The first planetary gear set 10 comprises a first sun gear 11 being a first gear set element. The first planetary gear set 10 comprises a first carrier 12 being a second gear set element. The first planetary gear set 10 comprises a number of first planetary studs 13 and a number of first planetary gears 14. The first planetary gear set 10 comprises a first ring gear 15 being a third gear set element. The first sun gear 11 is in meshing engagement with one of the first planetary gears 14. One of the first planetary gears 14 is in meshing engagement with the first ring gear 15 and is rotatably supported by one of the first planetary studs 13. The first planetary studs 13 are attached to the first carrier 12.

The second planetary gear set 20 comprises a second sun gear 21 being a first gear set element. The second planetary gear set 20 comprises a second carrier 22 being a second gear set element. The second planetary gear set 20 comprises a number of second planetary studs 23 and a number of second planetary gears 24. The second planetary gear set 20 comprises a second ring gear 25 being a third gear set element. The second sun gear 21 is in meshing engagement with one of the second planetary gears 24. One of the second planetary gears 24 is in meshing engagement with the second ring gear 25 and is rotatably supported by one of the second planetary studs 23. The second planetary studs 23 are attached to the second carrier 22. The second carrier 22 is connected torque proofly to the housing 9 at a radially outer side of the second planetary gear set 20.

The first planetary gear set 10 and the second planetary gear set 20 are arranged in the same plane in the axial direction. The second planetary gear set 20 is arranged outside of the first planetary gear set 10 in the radial direction. The first planetary gear set 10 and the second planetary gear set 20 are radially stacked. The first ring gear 15 and the second sun gear 21 are formed by a sun ring gear 30. Thereby, the first ring gear 15 is connected torque proofly to the second sun gear 21 for transmitting a driving force from the first planetary gear set 10 to the second planetary gear set 20. The sun ring gear 30 is annularly formed. The sun ring gear 30 comprises the first ring gear 15 on an inner circumference. The sun ring gear 30 comprises the second sun gear 21 on an outer circumference.

The input element 4, the first output element 5 and the second output element 6 are arranged coaxially. The first output element 5 and the second output element 6 extend into opposite directions in the axial direction. The input element 4 is formed as an input shaft for receiving a driving force from the motor 3. The first output element 5 is formed by the first carrier 12 for outputting a driving force out of the first planetary gear set 10. The second output element 6 is formed by a ring gear carrier for the second ring gear 25 and extends radially outwards from the first output element 5 to the second ring gear 25. The ring gear carrier is connected torque proofly to the second ring gear 25. The second output element 6 is configured for outputting a driving force out of the second planetary gear set 20.

The second output element 6 is torque proofly connected to the second ring gear 25. The second output element 6 is connected torque proofly to the first output element 5 via a dog toothing. The torque proof connection 56 between the first output element 5 and the second output element 6 comprises a snap ring for positioning the first output element 5 and the second output element 6 in the axial direction with respect to each other. The first carrier 12 forms the driving element 7 being configured as a driving shaft. Thereby, the first output element 5 and the second output element 6 are connected torque proofly to the driving element 7. The driving force of the first output element 5 and the second output element 6 is summarized and transmitted to the driving element 7.

The rotor of the motor 3 is supported by a first bearing unit 41 and a second bearing unit 42, each comprising a radial grooved ball bearing. The first bearing unit 41 is arranged at the first side of the rotor in the axial direction. The second bearing unit 42 is arranged at the second side of the rotor in the axial direction between the rotor and the transmission. The second bearing unit 42 is configured for supporting the rotor and additionally the input element 4. The driving element 7 is supported by a third bearing unit 43 comprising a radial double row ball bearing. The first bearing unit 41 of the first drive unit and the first bearing unit 41 of the second drive unit are accommodated by a double bearing seat formed by the central wall 91.

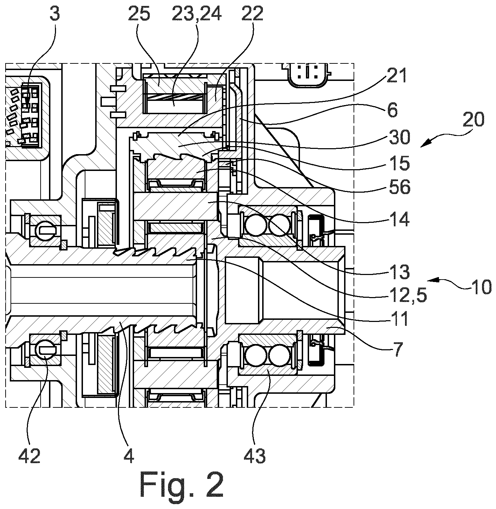

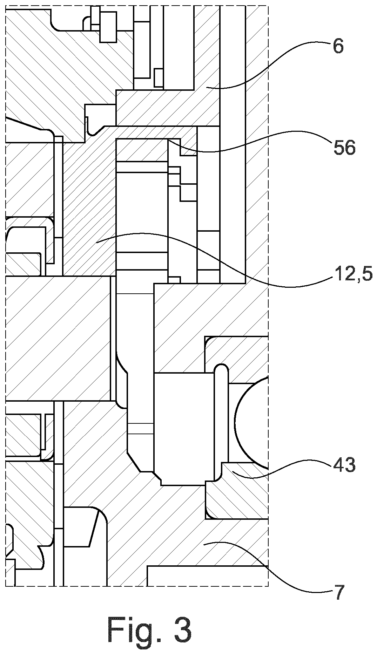

Figures 2 and 3 show a detailed view of the axle drive apparatus shown in figure 1. The first output element 5 and the second output element 6 are formed by separate parts which are connected by the torque proof connection 56. The torque proof connection 56 between the first output element 5 and the second output element 6 is formed by a form-fit connection that comprises a dog toothing. A dog toothing profile is formed at an outer circumference of the first planetary carrier 12 of the first output element 5 and at an inner circumference of the second output element 6, respectively. The dog toothing profiles are in engagement with each other. In one embodiment, torque proof connection 56 comprises a snap ring for positioning the first output element 5 and the second output element 6 with respect to each other in the axial direction.

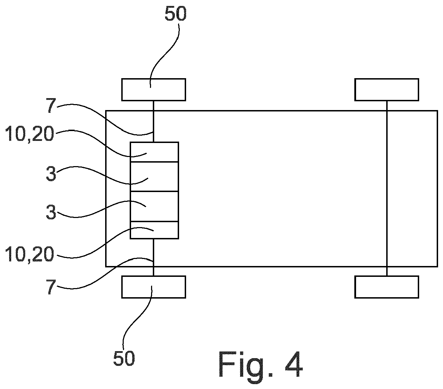

Figure 4 shows a top view of a schematic diagram of an embodiment of a vehicle comprising the axle drive apparatus as described with reference to figures 1 to 3 and two traction elements 50 being formed by driving wheels. The axle drive apparatus comprises two drive units. Each drive unit comprises a motor 3, a transmission having the first planetary gear set 10 and the second planetary gear set 20, and a driving element 7 for outputting the driving force to one of the traction elements 50 for moving the vehicle.

### Reference signs

- 3: motor
- 4: input element
- 5: first output element
- 6: second output element
- 7: driving element
- 9: housing
- 10: first planetary gear set
- 11: first sun gear
- 12: first carrier
- 13: first planetary stud
- 14: first planetary gear
- 15: first ring gear
- 20: second planetary gear set
- 21: second sun gear
- 22: second carrier
- 23: second planetary stud
- 24: second planetary gear
- 25: second ring gear
- 30: sun ring gear
- 41: first bearing unit
- 42: second bearing unit
- 43: third bearing unit
- 56: torque proof connection
- 91: central wall

## Claims

1. A drive unit for an axle drive apparatus of a vehicle, wherein the drive unit comprises a transmission having an input element (4), a first output element (5), a second output element (6) being separate from the first output element (5), and a driving element (7), wherein a driving force of a motor (3) is providable at the input element (4), wherein the first output element (5) is connected torque proofly to the second output element (6), and wherein the first output element (5) and the second output element (6) are connected torque proofly to the driving element (7) for outputting a driving force from the drive unit.

2. The drive unit according to claim 1, **characterized in that** the torque proof connection between the first output element (5) and the separate second output element (6) is provided by at least one of a form-fit and a material-locking connection.

3. The drive unit according to claim 2, **characterized in that** the torque proof connection is formed by at least one of a welded connection and a dog toothing.

4. The drive unit according to one of claims 1 to 3, **characterized in that** the drive unit comprises a stationary element (9), and the transmission comprises a first planetary gear set (10) and a second planetary gear set (20) each comprising a first gear set element, a second gear set element, and a third gear set element, wherein the input element (4) is connected torque proofly to the first gear set element (11) of the first planetary gear set (10), the second gear set element (12) of the first planetary gear set (10) is connected torque proofly to the first output element (5), the third gear set element (15) of the first planetary gear set (10) is connected torque proofly to the first gear set element (21) of the second planetary gear set (20), the second gear set element (22) of the second planetary gear set (20) is connected torque proofly to the stationary element (9), and the third gear set element (25) of the second planetary gear set (20) is connected torque proofly to the second output element (6).

5. The drive unit according to claim 4, **characterized in that** the first gear set element of the first planetary gear set (10) is formed by a first sun gear (11), the second gear set element of the first planetary gear set (10) is formed by a first carrier (12), the third gear set element of the first planetary gear set (10) is formed by a first ring gear (15), the first gear set element of the second planetary gear set (20) is formed by a second sun gear (21), the second gear set element of the second planetary gear set (20) is formed by a second carrier (22), and the third gear set element of the second planetary gear set (20) is formed by a second ring gear (25).

6. The drive unit according to one of claims 4 or 5, **characterized in that** the torque proof connection between the second gear set element (22) of the second planetary gear set (20) and the stationary element (9) comprises a dog toothing.

7. The drive unit according to one of claims 4 to 6, **characterized in that** the first planetary gear set (10) and the second planetary gear set (20) are radially stacked.

8. The drive unit according to one of claims 1 to 7, **characterized in that** the drive unit comprises a motor (3), wherein the motor (3) and the transmission are arranged coaxially with respect to each other.

9. The drive unit according to claim 8, **characterized in that** a first bearing unit (41) and a second bearing unit (42) for supporting a rotor of the motor (3) are arranged on opposing sides of the rotor, wherein the second bearing unit (42) is configured for additionally supporting the input element (4) and is arranged in the axial direction between the motor (3) and the transmission.

10. The drive unit according to claim 9, **characterized in that** a third bearing unit (43) for supporting the driving element (7) is arranged on a side of the transmission opposite to the motor (3).

11. An axle drive apparatus comprising first and second drive units according to one of claims 1 to 10, the driving elements (7) of the first drive unit and the second drive unit being directed into opposing directions.

12. The axle drive apparatus according to claim 11, **characterized in that** the first drive unit and the second drive unit are arranged coaxially with respect to each other.

13. The axle drive apparatus according to claim 11 or 12, **characterized in that** the first drive unit and the second drive unit each comprise a motor (3) for inputting a driving force into the respective input element (4).

14. The axle drive apparatus according to one of claims 11 to 13, **characterized in that** the axle drive apparatus comprises a stationary element forming a housing (9), the housing (9) comprising a central wall (91) for separating a first housing space for accommodating the first drive unit from a second housing space for accommodating the second drive unit.

15. A vehicle comprising an axle drive apparatus according to one of claims 11 to 14 and at least two traction elements (50), wherein each of the driving elements (7) of the axle drive apparatus is configured for driving one of the traction elements (50) for moving the vehicle.
